# EUROPEAN PATENT SPECIFICATION

(11) **EP 0 914 978 B1**
(45) Date of publication and mention of the grant of the patent: **30.04.2008**
(21) Application number: 98921784.9
(22) Date of filing: 25.05.1998
(51) Int. Cl.: B60G 21/055, B60G 5/00, B60G 11/44, B60G 11/64

(54) **SUSPENSION FOR TWO-REAR-AXLE VEHICLES**
AUFHÄNGUNG FÜR FAHRZEUGE MIT ZWEI HINTERACHSEN
SUSPENSION POUR VEHICULES A DEUX ESSIEUX ARRIERE

(30) Priority: 26.05.1997 JP 14994197
(43) Date of publication of application: 12.05.1999
(73) Proprietor: Isuzu Motors Limited, Tokyo 140-8722 (JP)
(72) Inventor: HOSOYA, Haruyuki, Isuzu Motors Ltd. Kawasaki Fac., Kawasaki-shi, kanagawa 210-8524 (JP)
(74) Representative: Jenkins, Peter David
(86) International application number: PCT/JP1998/002272
(87) International publication number: WO 1998/054018

(56) References cited:
- DE-A- 4 216 542
- JP-A- 59 002 912
- JP-U- 6 027 224
- JP-U- 57 159 505
- JP-U- 63 155 808
- PATENT ABSTRACTS OF JAPAN vol. 0080, no. 87 (M-291), 20 April 1984 (1984-04-20) -& JP 59 002912 A (ISUZU JIDOSHA KK), 9 January 1984 (1984-01-09)
- PATENT ABSTRACTS OF JAPAN vol. 0141, no. 32 (M-0948), 13 March 1990 (1990-03-13) & JP 2 003504 A (HONDA MOTOR CO LTD), 9 January 1990 (1990-01-09)
- PATENT ABSTRACTS OF JAPAN vol. 1997, no. 08, 29 August 1997 (1997-08-29) & JP 9 099720 A (FUKOKU CO LTD), 15 April 1997 (1997-04-15)
- PATENT ABSTRACTS OF JAPAN vol. 0090, no. 38 (M-358), 19 February 1985 (1985-02-19) & JP 59 179415 A (HINO JIDOSHA KOGYO KK), 12 October 1984 (1984-10-12)
- PATENT ABSTRACTS OF JAPAN vol. 0080, no. 87 (M-291), 20 April 1984 (1984-04-20) & JP 59 002915 A (HINO JIDOSHA KOGYO KK), 9 January 1984 (1984-01-09)

## Description

### Technical Field

The present invention relates to a suspension assembly adapted for use in rear two-axle road vehicles.

### Background Art

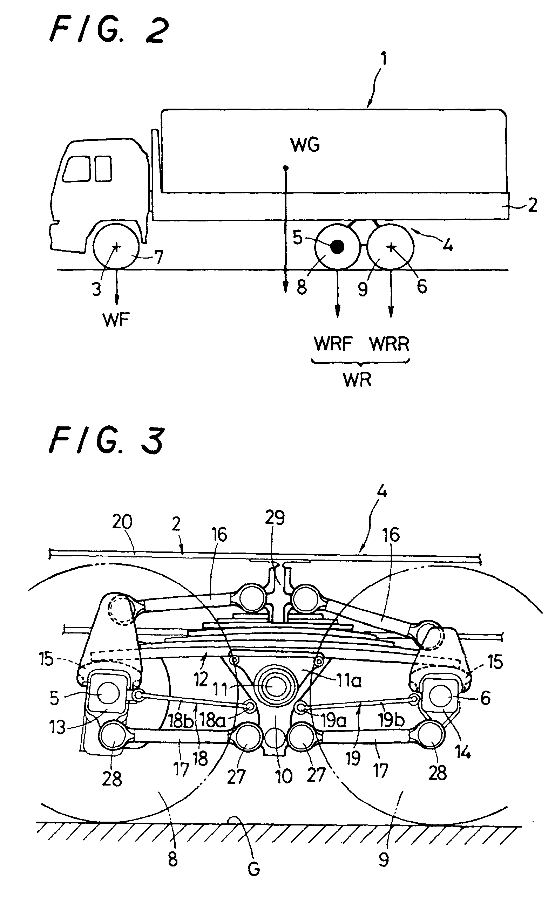

A rear two-axle road vehicle 1 shown in Fig. 2 of the accompanying drawings is a common heavy-duty road vehicle having a front axle and a rear two-axle set 4 attached to a frame 2. In this type of rear two-axle road vehicles, the rear two-axle set 4 is conventionally composed of a forwardly positioned driving axle 5 and a rearwardly positioned non-driving axle 6 while only two out of six wheels including front wheels are powered to thereby provide the driving system what is known as the rear two-axle, single powered axle (6 × 2) system for rendering the power transmission system simple in structure. The gross vehicle weight WG of the vehicle weight and the load weight may be shared to a load WF to be supported by the front wheels or tires on the front axle 3 and the other load WR to be charged by the rear wheels or tires 8, 9 on the rear axles 5, 6. The load WR charged on the rear two-axle set is further divided into a load WRF allotted to the driving axle 5 and the other load WRR allotted to the non-driving axle 6 and usually the shared loads WRR and WRF are equal with each other. This makes it possible to reduce the axle load to be charged on each axle while increase the permissible loading capacity of the vehicles.

A common form of a suspension for the rear axle set 4 in the rear two-axle road vehicle 1 is comprised of elastic means interposed between the frame 2 and each of axle housings supporting the axles 5, 6 for rotation, such as leaf springs, air springs as disclosed in Japannese Patent Laid-Open No. 169956/1993, and combined types of leaf springs and air springs. In any type of elastic means, resonance occurs when the frequency of the frame 2 approaches the natural frequency of the elastic means so that the frame is hard to be damped down in vibrations. To cope with this, shock absorbers have been conventionally equipped for cushioning the vibratory energy of the frame.

Disclosed in, for example, in Japanese Patent Laid-Open No. 2912/1984 a trunnion-equipped suspension system using the leaf springs. Fig. 3 shows a trunnion-equipped suspension system similar to that disclosed in the above citation. It is to be noted that the same reference characters identify like parts in each of Figs. 2 and 3. On the suspension system in Fig. 3, a pair of trunnion brackets 10, only one being shown, spaced apart widthwise the vehicle depends downward from the underside of the frame 2 which extends fore and aft. Trunnion shafts 11 extend sidewise outwardly of the frame and terminate into lugs 11a, on each of which a stack of leaf springs 12 is mounted pivotally so as to extend fore and aft. The stack of leaf springs 12 is supported at lengthwise extremities thereof by sliding seats 15 that are provided on axle housings in which the driving axle and non-driving axle are respectively carried for rotation.

Provided at the opposing sides transversely of the vehicle are torque rods 16, 17 extending in parallel with the leaf springs 12 and in vertically spaced relation with each other. The torque rods are connected pivotally at the lengthwise opposed ends thereof to their associated trunnion brackets 10 and axle housings 13, 14 at which the driving axle 5 and non-driving axle 6 are respectively supported for rotation. Hence eight torque rods are provided for the rear axle set 4. The both the axle housings 13, 14 and the trunnion brackets 10 may constitute, in combination with the torque rods 16, 17, parallel linkages for permitting vertical movement of the axle housings 13, 14 relatively of the frame 2.

On the trunnion-equipped suspension system as described just above, the weight imparted to the rear axle set 4 may be transmitted from the frame 2 to both the driving axle 5 and non-driving axle 6 through the sequence of pairs of trunnion brackets 10, leaf springs 12 and axle housings 13, 14 so as to rest on the tires 8, 9. Deflection of the leaf springs in response to the motion of the attaching parallel linkages may cushion the vertical impact owing to road irregularities or rough roads on which the tires 8, 9 run. The fore-and-aft forces imparted to the vehicle resulting from the acceleration and/or braking, or driving uphill and downhill may be transmitted between the frame 2 and both the driving axle 5 and non-driving axle 6 through the axle housings 13, 14, torque rods 16, 17 and any one of the trunnion brackets 10 and side members 20. That is, the fore-and-aft forces may be transmitted along the axial direction of the torque rods 16, 17. Moreover, the lateral forces on the vehicle is transmitted through the leaf springs 12, which are abutted at the lengthwise side surfaces thereof against, for example, the trunnion brackets 10 and axle housings 13, 14.

The leaf springs are generally greater in weight with the result of raising the fuel-consumption of the vehicle. Accordingly it has been required to render the leaf springs less in weight to lower the fuel-consumption rate, whereas this tends to reduce the antirolling performance about the rolling axis, or fore-and-aft axis of the vehicle, on turns of the vehicle. To cope with this, stabilizers 18, 19 have been developed which comprises torsion-bar sections 18a, 19a mounted for rotation in the trunnion brackets 10 and extended sidewise the vehicle, and arm sections 18b, 19b extended from the opposed ends of the torsion-bar sections 18a, 19a in intersection with the torsion-bar sections and connected with the axle housings 13, 14. In case where the vehicle run up onto the curbstones on any only one side rear wheels and thereby the axle housings 13, 14 move vertically at their sidewise one side of the vehicle with respect to the frame 2, the arm sections 18b, 19b of the stabilizers 18, 19 are forced to rotate about the torsion-bar sections 18a, 19a, whereby the twisting moments may occur in the torsion-bar sections 18a, 19a. The twisting moments have a tendency to make the axle housings 13, 14 move similarly relative to the frame 2 on the other side of the vehicle with resulting in the enhancement in the antirolling performance about the rolling axis, which performance will be referred as roll stiffness hereinafter. It is to be noted that the stabilizers 18, 19 are ordinary designed to be equal with each other in twisting stiffness, as the above citation has no disclosure suggestive of stabilizers differing from each other in their stiffness.

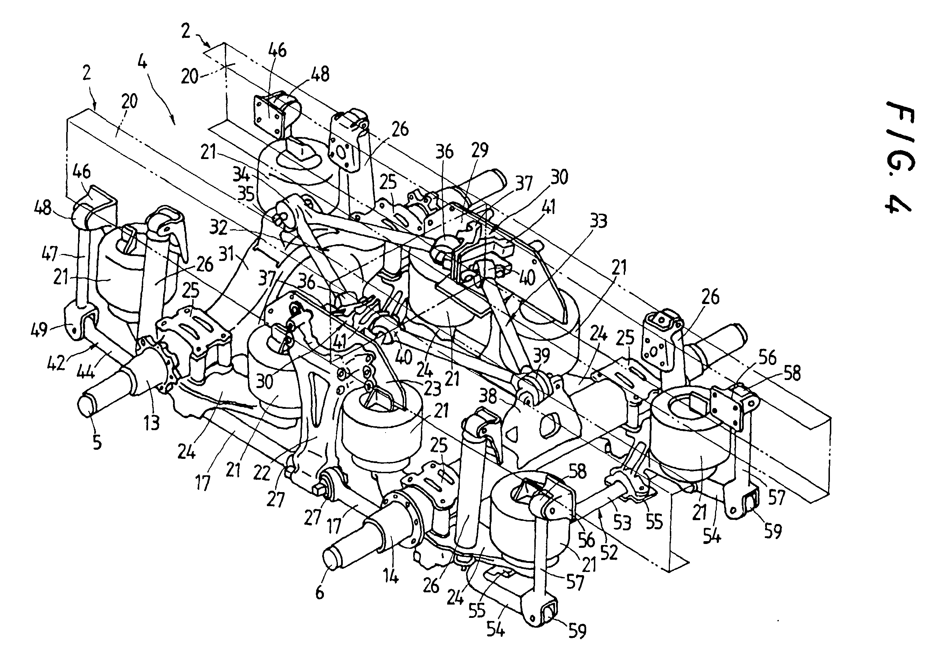

For the suspension system for the rear multi-axle set 4, there has been further developed an air suspension system in which both the driving axle 5 and non-driving axle 6 are pneumatically supported by the action of air springs 21, an example of which is shown in Fig. 4. The air springs 21, although various tanks and piping are required, may offer a noticeable advantage of the possibility of reducing the weight as compared with the leaf springs. The air suspension system described above may provide a supple support of the frame 2 on the wheels, but the spring rate of the air springs 21 is low and therefore the frame is apt to suffer the unbalanced fluctuations of large vertical displacement, what is known as sway or roll, under even a little variation in exerted forces. The prior air suspension system with air springs adapted for use in the rear two-axle load vehicle usually has the stabilizers greater in stiffness, as compared with the suspensions having other types of spring, to keep the frame 2 at a constant horizontal attitude.

The frame 2 in Fig. 4 is primarily composed of fore-and-aft side members 20 spaced sidewise apart from each other, and a cross member 29 extending transversely midway of the rear axle set 4. Torque rod brackets 22 are arranged midway of the rear axle set 4 and secured to the outside of the side members 20 through mounting plates 23. The torque rod brackets 22 extend under the horizontal levels linking the axle centres of the driving and non-driving axles 5 and 6. Fore-and aft horizontal beams 24 are further mounted underneath the widthwise opposing ends of the axle housings 13, 14 for the driving and non-driving axles 5 and 6 through mounting units 25. The horizontal beams 24 are each provided at the lengthwise opposing ends thereof with air springs 21, eight of which are provided per the rear axle set 4 so that the loads exerted on the rear axle set 4 are shared to eight air springs 21 with the result of reducing the loads per each air spring. It will be thus understood that the loads imparted to the air springs 21 are transmitted through axle housings 13, 14 to the tires 8, 9 on the earth. Because the air springs 21 are low at spring rate, the suspension of the air springs 21 alone is apt to cause the vibrations of the frame 2 and, when resonance occurs, the vibrations are hard to be attenuated. To deal successfully with attenuation of the vibrations, shock absorbers 26 have been provided between the horizontal beams 24 and the frame 2.

Provided on opposing sides transversely of the vehicle between the torque rod brackets 22 and the horizontal beams 24 mounted to the axle housings 13, 14 are torque rods 17, the ends of which are pivotally connected to the bottom of the horizontal beams 24 and the lower portions of the torque rod brackets 22 through pivot pins 27 each having axis extending sidewise vehicle. The pivot pins 27 in Fig. 4 are shown on the only one side of the vehicle. The torque rods 17 may transmit the forces imparted along the lengthwise directions thereof and therefore they make it possible to transmit the fore-and-aft forces such as the driving and braking thrust forces that will occur between the frame 2 and wheels at acceleration and deceleration of the vehicle. Whereas the torque rods 17 allow the unit wheels of the tires, axle housings 13, 14 and beams 24 to move vertically relative to the frame 2 owing to the road irregularities. Hence, the suspension system may cope with the vertical movement to cushion the direct transmission of the impact from the road surface to the frame 2.

The side members 20, 20 midway of the rear axle set 4 are fixed to a cross member 29 by means of, for example, rivets or bolts. A forwardly positioned V-rod 33 is arranged between the axle housing 13 and crossing sections 30 at which the opposing ends of the cross member 29 mate with their associated side members 20 while a rearwardly positioned V-rod 33 is arranged between the axle housings 14 and the crossing sections 30. The forwardly positioned V-rod 32 is arranged in a rearwardly diverged manner between the crossing sections 30 and a housing cover 31 in which is enclosed a differential gear for the driving axle 5. Secured on bulged portion of the housing cover 31 integral with of the axle housing 13 for the driving axle 5 is a fore-mounting bracket 35 to which is mounted a merging extremity 34 of the forwardly positioned V-rod 32. Moreover mounted to both the frame 2 and cross member 29 at the crossing sections 30 are crossing brackets 37 to which are attached to leg ends 36 of the forwardly positioned V-rod 32. It will be understood that the merging extremity 34 is in integrity with the leg ends 36 through major rod sections.

The rearwardly positioned V-rod 33 is arranged in a forwardly diverged manner between the crossing sections 30 and an aft-mounting bracket 38, which is secured on the axle housing 14 for the non-driving axle 6. Pivotally mounted to the aft-mounting bracket 38 on the axle housing 14 for the non-driving axle 6 is a merging extremity 39 of the rearwardly positioned V-rod 33. Moreover mounted to both the frame 2 and cross member 29 at the crossing sections 30 are crossing brackets 41 to which are attached leg ends 40 of the rearwardly positioned V-rod 33. It will be understood that the merging extremity 39 is also in integrity with the leg ends 40 through major rod sections. The crossing brackets 37, 41 are disposed in symmetry with each other and connected in back to back relation while sandwiching the cross member 29 therebetween.

Like the torque rods 17, both the V-rods 32, 33 should allow the vertical movement of the rear axle set 4, inclusive of the tires 8, 9 and axle housings 13, 14, with respect to the frame 2 to thereby provide the adequate suspension function for cushioning the impact of the road irregularities. To this end, the forwardly positioned V-rod 32 is connected at the merging extremity 34 thereof with the fore-mounting bracket 35 for rotation about an axis parallel with the driving axle 5, while the other V-rod 33 is connected at its merging extremity 39 with the aft-mounting bracket 38 for rotation about an axis parallel with the driven axle 6. Similarly, both the V-rods 32, 33 are respectively connected at their leg ends 36, 40 to the crossing brackets 37, 41 for rotation about axes intersecting with the major rods of the V-rods. Rotating movement of the leg ends 36, 40 relative to the crossing brackets 37, 41 is not simple rotation, but complex rotation and therefore both the merging extremities 34, 39 and leg ends 36, 40 should be kept from inadvertent motions relative to the brackets 35, 38, 37, 41 to help ensure the complex rotation. To deal with such requirement, friction bushings are interposed at the brackets 35, 38, 37, 41 to make it possible to rotate in frictional sliding manner.

The V-rods 32, 33, like the torque rods 17, may transmit the fore-and aft forces imparted between the frame 2 and axle housings 13, 14. The V-rods 32, 33 may further transmit the lateral or sidewise forces imparted between the frame 2 and housings 13, 14 because of their V-like structure.

Spanned transversely of the vehicle underneath the fore-and-aft horizontal beams 24 secured to the axle housing 13 for the driving axle 5 is a stabilizer for the driving axle, that is, a first stabilizer 42 represented by only one of first arm sections 44 extending forwardly of the vehicle. First rods 47 are attached for rotation at upper pivotal ends 48 thereof to the frame 2 through brackets 46 while depending downwards and connected pivotally at lower ends 49 thereof to the foremost ends of the first arm sections 44. Similarly provided underneath the horizontal beams 24 associated with the non-driving axle 6 are a second stabilizer 52 composed of a second torsion-bar section 53 and second arm sections 54 and supported for rotation at 55 underneath the horizontal beams 24. Second rods 57 are attached for rotation at upper pivotal ends 58 thereof to the frame 2 through brackets 56 while depending downwards and connected pivotally at lower ends 59 thereof to the foremost ends of the second arm sections 54. If the vertical clearance between the frame 2 and the axle housings 13, 14 varies relatively at any one side transversely of the vehicle owing to the roll or sidewise titling of the vehicle, both the first and second stabilizers 42, 52, like the stabilizers 18, 19 in the trunnion-equipped suspension system shown in Fig. 3, may generate the twisting forces in response to the relative deviation to thereby act so as tocause the same relative vertical deviation for the clearance between the frame 2 and the axle housings 13, 14 at the opposing side of the vehicle, resulting in preventing the roll of the vehicle.

It is well known another type of the suspension system employing the combined leaf springs with air springs provided between the frame and the axle housings of the rear two-axle set. On this prior suspension system, not shown, the axle housings for the driving axle and non-driving axle are supported with the leaf springs, which are supported with the frame by, for example, being pivotally connected at their heads to the frame while being mounted at their tails to the frame through the air springs.

The suspension system of the combined leaf springs with air springs is provided with stabilizers for the roll performance of the vehicle, or the twisting performance about the fore-and-aft axis of the vehicle. That is to say, the structural components influencing the roll stiffness are the leaf springs and axle housings, instead of the stabilizers. Hence, the leaf springs should ensure the roll stiffness in addition to the resistance against the vertical loads. To satisfy these requirements, the permissible spring rate of the leaf springs should be critically limited so that it is almost impossible to control the spring rate so as to serve as the stabilizers that have the effects on roll stiffness.

The following problems will be resulted from that the stabilizers for the driving axle and non-driving axle are equal in stiffness and that the spring rate of the leaf springs used in place of the stabilizers is scarcely controlled. The problem resides in that, in case where the vehicle with no application or less application of load has run up onto the curbstones of about from 120mm to 150 mm in height on any only one side rear wheel, the curbstones may often immobilize the vehicle. The gross stiffness of both stabilizers is usually designed so as to provide a considerably high spring rate in order to ensure the roll performance of the vehicle. As a result, with the vehicle running up onto the curbstones on any only one side rear wheel carried by the driving axle of the rear two-axle vehicle, the restoring function of the stabilizers often overcomes the gross vehicle weight, resulting in lifting the other of the rear driving wheels from the earth.

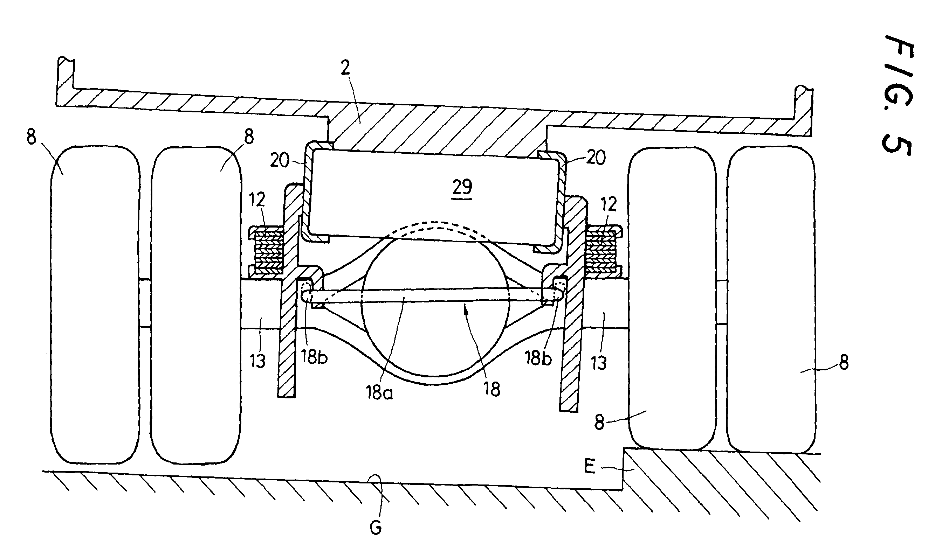

Referring to Fig. 5 schematically showing the rear axle assembly in which its right rear wheels 8 run onto the curbstone E, the suspension system makes relax a tendency displacing the frame 2 upwards at its left side in Fig. 5 and, thus, the frame 2 comes relatively close to the axle housing 13 at the right side thereof while coming apart from the axle housing 13 at its left side in Fig. 5. Consequently the stabilizer 18 acts in counter to the springs of the suspension system, so that the right arm section 18b of the stabilizer 18 in Fig. 5 are forced upwards by the axle housing 13. This generates the twisting moment in the torsion-bar section 18a, which moment may be transmitted leftward in Fig. 5 so as to make the frame 2 and the axle housing 13 come close to each other. The unsprung weight of the tires and axle housings is relatively light and, therefore, where there is no application or less application of load, the stabilizer 18 make both the left tires 8 and axle housing 13 in Fig. 5 move towards the frame 2 resulting in lifting the tires 8 from the earth G. The driving power from the engine apparently causes the lifted wheel to run idle so that it is very hard to get away from the ground of irregular contours.

An object of the present invention is to overcome the above-described shortcomings and founded on that, on the supposition of the overall stiffness of both the stabilizers for the driving axle and non-driving axle being kept constant, the roll stiffness due to the rear wheels contributing to the roll stiffness of the vehicle is inevitably invariable and therefore it is possible to make each the stabilizers more flexible or allowable in stiffness thereof. Accordingly, a primary object of the present invention is to provide a suspension system for a rear two-axle road vehicle provided with stabilizers for each of a forwardly positioned axle and rearwardly positioned axle in a rear two-axle set, wherein there is a difference in stiffness between both the stabilizers for driving axle and non-driving axle whereby the vehicle is improved in the performance of getting away from ground of irregular contours.

### Disclosure of Invention

The present invention is concerned with a suspension assembly for a rear two-axle road vehicle, comprising a rear two-axle set composed of a driving axle and a non-driving axle, a first axle housing for supporting the driving axle for rotation, a second axle housing for supporting the non-driving axle for rotation, elastic means for suspension provided between a frame and each of the first and second axle housings, a first stabilizer provided between the frame and the first axle housing, and a second stabilizer provided between the frame and the second axle housing, the first stabilizer being made less in stiffness than the second stabilizer.

In accordance with the means to assist the driving for the rear two-axle road vehicle of the present invention designed as described just, even under the road-handing condition such that the vehicle runs onto the curbstone on only one side rear wheel on the driving axle, the other side wheel on the driving axle may be kept in firm engagement with the earth because of the less stiffness of the first stabilizer, whereby the driving torque is ensured on the both wheels on the driving axle, resulting in rendering the vehicle to get away from the curbstone.

The first and second stabilizers are proportioned in their stiffness so as to ensure the stiffness of the rear two-axle set defined according to a required roll performance of the vehicle so that the overall stiffness of the stabilizers for the rear two-axle set is adaptable to the predetermined roll performance of the vehicle.

The elastic means for suspension may be comprised of any one of leaf springs and air springs. The suspension assembly for the rear two-axle road vehicle of the present invention may offer the great advantage for the air spring because the air spring has a low spring rate that may result in making the stiffness of the stabilizer greater. It is of course that the suspension assembly for the rear two-axle road vehicle may be applicable to the leaf spring suspensions and the combined types of leaf spring with air spring.

The first stabilizer is composed of a first torsion-bar section mounted to the first axle housing for rotation and extending widthwise the vehicle, and first arm sections extending in intersection with the first torsion-bar section, while the second stabilizer is composed of a second torsion-bar section mounted to the second axle housing for rotation and extending widthwise the vehicle, and second arm sections extending in intersection with the second torsion-bar section. The first stabilizer in the stabilizer system described just above may be disposed ahead the driving axle with the first torsion-bar section being close to the driving axle, while the second stabilizer is also disposed backwards the non-driving axle with the second torsion-bar section being close to the non-driving axle.

The first torsion-bar section is made less in diameter than the second torsion-bar section to thereby render the first stabilizer less in stiffness than the second stabilizer. That is, supposing that the arm sections in the stabilizers are equal in length, the stiffness in the stabilizer may be varied by modifying the diameter of the torsion-bar section. Making the first torsion-bar section less in diameter than the second torsion-bar section, hence, results in making the first stabilizer less in stiffness than the second stabilizer.

As an alternative, the first arm sections may be made greater in length than the second arm sections to thereby render the first stabilizer less in stiffness than the second stabilizer. That is to say, in case where the torsion-bar sections of the stabilizers are equal in constitution with each other, the arm sections greater in length of the associated stabilizer may render less variation to the twisting moment occurring in the associated torsion-bar section even though the torsion bars are equally subject to the vertical displacement. The makes it possible to provide the same effect as the reduction of the stiffness. It will be thus understood that the first arm sections are made greater in length than the second arm sections to thereby render the first stabilizers less in stiffness than the second stabilizers.

### Brief Description of Drawing

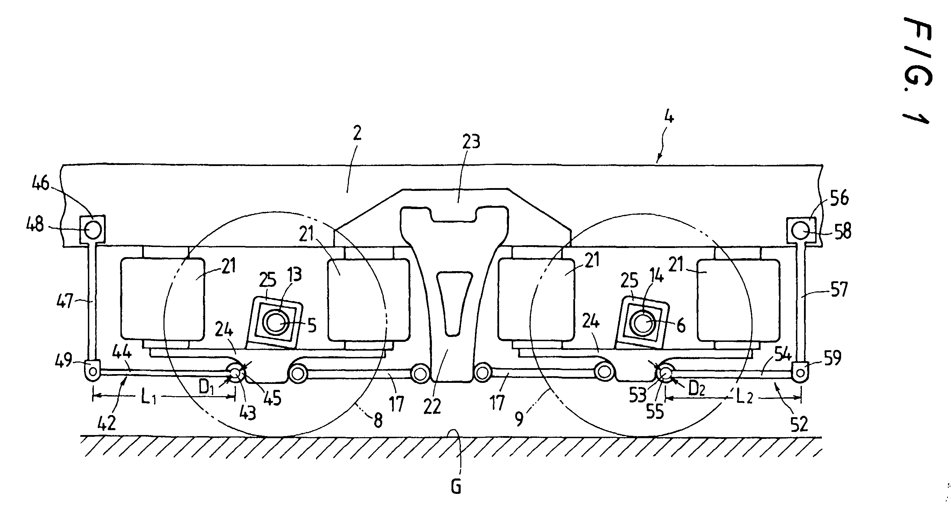

Figure 1 is a side elevation showing a preferred embodiment of a rear multi-axle set to which is adapted a suspension assembly in accordance with the present invention for a rear two-axle road vehicle; Figure 2 is a schematic side elevation illustrating the outline of the conventional rear two-axle road vehicle; Figure 3 is a side elevation showing a conventional leaf springs-equipped suspension assembly for a rear two-axle road vehicle; Figure 4 is a fragmentary perspective view showing an embodiment of a rear multi-axle set in an air spring-equipped suspension assembly for a rear two-axle road vehicle; and Figure 5 is a schematic view illustrating a conventional suspension assembly for a rear two-axle road vehicle in which driving wheels on any one side of the vehicle have run onto curbstones.

### Best Mode for Carrying out the Invention

Referring now in detail to the drawings, a preferred embodiment of a suspension assembly for a rear two-axle road vehicle according to the present invention will be explained below. Shown in Fig.1 is a rear axle set employing a suspension assembly for a rear two-axle road vehicle equipped with air springs 21. In the following description, the same reference character identifies equivalent or same parts in both of Figs. 1 and 4 and, therefore, the repetition of the same parts will be omitted.

The suspension assembly for the rear two-axle road vehicle according to the present invention may be adapted for use in various driving systems of vehicles including a rear two-axle, single powered axle (6 × 2) system. Provided underneath the beams 24 mounted sidewise outwardly of the axle housing 13 for the driving axle 5 are the first stabilizer 42 that is arranged like the first stabilizer 42 in Fig. 4, or in symmetry with the second stabilizer 52 in Fig. 4. The first stabilizer 42 is composed of a first torsion-bar section 43 and first arm sections 44, which are integral with the first torsion-bar section 43 and bent at the opposing ends of the first torsion-bar section to the fore-and-aft direction of the vehicle so as to extend forwardly. The first stabilizer 42 is supported for rotation by means of supporting portions 45 underneath the beams 24. The first rods 47 are attached for rotation at the upper pivotal ends 48 thereof to the frame 2 through the brackets 46 while depending downwards and connected pivotally at the lower ends 49 thereof to the foremost ends of the first arm sections 44. Since the first rods 47 are pivotally connected at both the upper and lower ends thereof with the frame 2 and first arm sections 44, the relative displacement between the frame 2 and the axle housing 13 causes the rotation of any one of the first arm sections 44 through the pivot connection with its associated first rod 47 whereby the twisting deflection occurs in the first torsion-bar section 43 to make the other first arm section 44 displace in a rotating manner.

Like the driving axle 5, the non-driving axle 6 is also provided underneath the beams 24 with the second stabilizer 52 of the same structure as the first stabilizer 42. The second stabilizer 52 is composed of the second torsion-bar section 53 and second arm sections 54 and supported for rotation at 55 underneath the beams 24. The second rods 57 are attached for rotation at the upper pivotal ends 58 thereof to the frame 2 through the brackets 56 while depending downwards and connected pivotally at the lower ends 59 thereof to the foremost ends of the second arm sections 54. The function of the second stabilizer 52 is substantially equivalent with that of the first stabilizer 42.

Although both the first and second stabilizers 42, 52 are, as having already been described above, to primarily keep the vehicle from the roll or sidewise titling, the suspension assembly for the rear two-axle road vehicle according to the present invention is further designed such that the first stabilizer 42 is made less in stiffness than the second stabilizer 52. The stiffness of the stabilizer may be defined as the ratio of the twisting moment occurring in the torsion-bar section to the vertical displacement in the clearance between the frame 2 and the axle housings 13, 14. Hence, supposing that the arm sections of the stabilizers are equal in material and length with each other, the stiffness of the stabilizer depends on the stiffness of the torsion-bar section. That is, in order to make the first stabilizer less in stiffness than the second stabilizer, the first torsion bar 42 of the first stabilizer 42 should be made less in a diameter D₁ than a diameter D₂ of the second torsion bar 53 in the second stabilizer 52 so as to be rendered easy in twisting deflection. In contrast, in case of the torsion-bar sections being equal in constitution with each other, the arm sections different in length from each other may cause the difference in twisting moment of the torsion-bar sections from each other even though the torsion bars are equally subject to the displacement in height of the clearance described above. Accordingly the arm sections 44 of the first stabilizer 42 may be made shorter in length L₁ than the second arm sections 54 in length L₂ of the second stabilizer 52 whereby the first stabilizer is made less in stiffness than the second stabilizer.

Making the first stabilizer 42 less in stiffness than the second stabilizer 52, as described just above, results in reducing the twisting moment occurring in the first stabilizer 42 owing to the relative displacement in height between the frame 2 and the axle housing 13 on the driving axle 5, which displacement will result from the road-handling condition where the vehicle runs onto the curbstone on only one side rear wheels on the driving axle. This inevitably minimizes the force acting so as to lift the other side rear wheels on the driving axle 5. The gross vehicle weight resting on the other side wheels so as to force them downwards overcomes the counterforce exerted on the same wheels by the first stabilizer 42 so as to lift them and, therefore, the other side wheels may kept in engagement with the earth. It will be thus understood that the driving wheels run without idling to gain the driving torque through firm engagement with the earth whereby the vehicle may get away from the curbstones. According to the present invention, moreover, the second stabilizer 52 is designed with greater stiffness as compared with the second stabilizer in the prior suspension system in which both the first and second stabilizers are equal in stiffness with each other. This makes it possible to ensure the overall stiffness of the stabilizers, which is required for the rear axle set 4 of the vehicle. That is to say, the overall stiffness in the stabilizers of the rear axle set 4 defined as the sum of the stiffness of the first and second stabilizers is allotted on the first and second stabilizers so as to be kept above the level required for the roll performance of the vehicle.

### Industrial Applicability

In accordance with the suspension assembly for the rear two-axle road vehicle of the present invention as described above, the first stabilizer is made less in stiffness than the second stabilizer. Even under the road-handing condition such that the vehicle runs onto the curbstone on only one side rear wheel on the driving axle, the other side wheel on the driving axle may be kept in firm engagement with the earth because of the less stiffness of the first stabilizer, whereby the driving torque is ensured on the both wheels on the driving axle, resulting in rendering the vehicle to get away from the curbstones. Moreover the overall stiffness in the first and second stabilizers of the rear axle set is allotted on the first stabilizer for the driving axle and the second stabilizer for the non-driving axle so as to be adaptable for the stiffness of the stabilizers required in accordance with the roll performance of the vehicle. This helps ensure the provision of the required roll performance for the vehicle.

## Claims

1. A suspension assembly for a rear two-axle road vehicle, comprising a rear two-axle set composed of a driving axle (5) and a non-driving axle (6), a first axle housing (13) for supporting the driving axle (5) for rotation, a second axle (14) housing for supporting the non-driving axle (6) for rotation, elastic means (21) for suspension provided between a frame (4) and each of the first and second axle housings, a first stabilizer (42) provided between the frame (4) and the first axle housing, and a second stabilizer (52) provided between the frame (4) and the second axle housing, **characterised by** the first stabilizer (42) being made less in stiffness than the second stabilizer (52).

2. A suspension assembly for a rear two-axle road vehicle according to claim 1, wherein the first and second stabilizers are proportioned in their stiffness so as to ensure an overall stiffness of the rear two-axle set, which is defined in accordance with a required roll performance of the vehicle.

3. A suspension assembly for a rear two-axle road vehicle according to any one of claim 1 and claim 2, wherein the elastic means is comprised of any one of leaf springs and air springs.

4. A suspension assembly for a rear two-axle road vehicle according to any one of from claim 1 to claim 3, wherein the first stabilizer is composed of a first torsion-bar section mounted to the first axle housing for rotation and extending widthwise the vehicle, and first arm sections extending in intersection with the first torsion-bar section, while the second stabilizer is composed of a second torsion-bar section mounted to the second axle housing for rotation and extending widthwise the vehicle, and second arm sections extending in intersection with the second torsion-bar section.

5. A suspension assembly for a rear two-axle road vehicle according to claim 4, wherein the first torsion-bar section is made less in diameter than the second torsion-bar section to thereby render the first stabilizer less in stiffness than the second stabilizer.

6. A suspension assembly for a rear two-axle road vehicle according to claim 4, wherein the first arm sections are made greater in length than the second arm sections to thereby render the first stabilizer less in stiffness than the second stabilizer.

## Patentansprüche

1. Aufhängung für ein Heck eines zweiachsigen Strassenfahrzeugs, aufweisend einen rückwärtigen Satz von zwei Achsen, zusammengesetzt aus einer Antriebsachse (5) und einer nicht-Antriebsachse (6), wobei ein erstes Achsgehäuse (13) die Antriebsachse (5) zur Rotation abstützt, ein zweites Achsgehäuse (14) die nicht-Antriebsachse (6) zur Rotation abstützt, einem elastischen Mittel (21) zur Aufhängung zwischen einem Rahmen (4) und sowohl dem ersten, als auch und dem zweiten Achsgehäuse, einem ersten Stabilisator (42), der zwischen dem Rahmen (4) und dem ersten Achsgehäuse vorgesehen ist und einen zweiten Stabilisator (52), der zwischen dem Rahmen (4) und dem zweiten Achsgehäuse vorgesehen ist,
**dadurch gekennzeichnet, dass**
der erste Stabilisator (42) mit geringerer Steifigkeit ausgebildet ist, als der zweite Stabilisator (52).

2. Aufhängung für ein Heck eines doppelachsigen Strassenfahrzeugs nach Anspruch 1, worin der erste und der zweite Stabilisator bezogen auf das Verhältnis ihrer Steifigkeiten derart ausgelegt sind, dass eine gesamte Steifigkeit des Doppelachssatzes gewährleistet ist, welches entsprechend einer geforderten Rollleistung des Fahrzeugs bestimmt wird.

3. Aufhängung für ein Heck eines doppelachsigen Strassenfahrzeugs, nach einem der Ansprüche 1 oder 2, worin das Elastische Mittel Blattfedern oder Luftfedern umfasst.

4. Aufhängung für ein Heck eines doppelachsigen Strassenfahrzeugs nach einem der Ansprüche 1 - 3, worin der erste Stabilisator aufgebaut ist aus einem ersten Torsionswellenbereich, der drehbar an dem ersten Achsgehäuse befestigt ist und sich in der Breite des Fahrzeugs erstreckt und einem ersten Querträgerbereichen, die sich kreuzend mit dem ersten Torsionswellenbereich erstrecken, während der zweite Stabilisator aufgebaut ist aus einem zweiten Torsionswellenbereich, der drehbar an dem zweiten Achsgehäuse befestigt ist und sich in der Breite über das Fahrzeug erstreckt, und einem zweiten Querträgerbereich, die sich kreuzend mit dem zweiten Torsionsträgerbereich erstrecken.

5. Aufhängung für ein Heck eines doppelachsigen Strassenfahrzeugs nach Anspruch 4, worin der erste Torsionswellenbereich im Durchmesser kleiner ausgelegt ist als der zweite Torsionswellenbereich um damit den ersten Stabilisator in seiner Steifigkeit geringer auszubilden, als den zweiten Stabilisator.

6. Aufhängung für ein Heck eines doppelachsigen Strassenfahrzeugs nach Anspruch 4, worin die ersten Querträgerbereiche in der Länge größer ausgebildet sind als die zweiten Querträgerbereiche, um damit den ersten Stabilisator in seiner Steifigkeit geringer auszubilden, als den zweiten Stabilisator.

## Revendications

1. Ensemble de suspension pour un véhicule routier à deux essieux arrière, comprenant un ensemble de deux essieux arrière composé d'un essieu moteur (5) et d'un essieu non moteur (6), d'un premier carter d'essieu (13) destiné à supporter l'essieu moteur (5) pour une rotation, d'un deuxième carter d'essieu (14) destiné à supporter l'essieu non moteur (6) pour une rotation, d'un moyen élastique (21) pour une suspension prévue entre un châssis (4) et chacun des premier et deuxième carters d'essieux, un premier stabilisateur (42) prévu entre le châssis (4) et le premier carter d'essieu, et un deuxième stabilisateur (52) prévu entre le châssis (4) et le deuxième carter d'essieu, **caractérisé par le fait que** le premier stabilisateur (42) est réalisé pour être moins rigide que le deuxième stabilisateur (52).

2. Ensemble de suspension pour un véhicule routier à deux essieux arrière selon la revendication 1, dans lequel les premier et deuxième stabilisateurs sont proportionnés en ce qui concerne leur rigidité de façon à assurer une rigidité globale de l'ensemble de deux essieux arrière, qui est définie en fonction des performances de roulement requises du véhicule.

3. Ensemble de suspension pour un véhicule routier à deux essieux arrière selon l'une quelconque des revendications 1 et 2, dans lequel le moyen élastique est constitué d'un quelconque ressort parmi des ressorts à lames et des ressorts pneumatiques.

4. Ensemble de suspension pour un véhicule routier à deux essieux arrière selon l'une quelconque des revendications 1 à 3, dans lequel le premier stabilisateur est constitué d'une première section de barre de torsion montée sur le premier carter d'essieu pour une rotation et s'étendant sur la largeur du véhicule, et de premières sections de bras s'étendant en intersection avec la première section de barre de torsion, alors que le deuxième stabilisateur est composé d'une deuxième section de barre de torsion montée sur le deuxième carter d'essieu pour une rotation et s'étendant sur la largeur du véhicule, et de deuxièmes sections de bras s'étendant en intersection avec la deuxième section de barre de torsion.

5. Ensemble de suspension pour un véhicule routier à deux essieux arrière selon la revendication 4, dans lequel la première section de barre de torsion est réalisée pour présenter un diamètre inférieur à celui de la deuxième section de barre de torsion pour rendre de cette manière le premier stabilisateur moins rigide que le deuxième stabilisateur.

6. Ensemble de suspension pour un véhicule routier à deux essieux arrière selon la revendication 4, dans lequel les premières sections de bras sont réalisées pour être plus longues que les deuxièmes sections de bras pour rendre de cette manière le premier stabilisateur moins rigide que le deuxième stabilisateur.
